# FASCICULE DE BREVET EUROPEEN

(11) **EP 3 679 694 B1**
(45) Date de publication et mention de la délivrance du brevet: **21.12.2022**
(21) Numéro de dépôt: 18759342.1
(22) Date de dépôt: 03.09.2018
(51) Int. Cl.: H04L 45/02, H04L 61/103

(54) **PROCÉDÉ DE COMMUNICATION MIS EN OEUVRE DANS UN SYSTÈME DOMOTIQUE POUR BÂTIMENT ET SYSTÈME DOMOTIQUE ASSOCIÉ**
VERFAHREN ZUR KOMMUNIKATION, DIE IN EINEM HEIMAUTOMATISIERUNGSSYSTEM FÜR EIN GEBÄUDE IMPLEMENTIERT IST, UND ZUGEHÖRIGES HEIMAUTOMATISIERUNGSSYSTEM
METHOD OF COMMUNICATION IMPLEMENTED IN A HOME-AUTOMATION SYSTEM FOR A BUILDING AND ASSOCIATED HOME-AUTOMATION SYSTEM

(30) Priorité: 04.09.2017 FR 1758148
(43) Date de publication de la demande: 15.07.2020
(73) Titulaire: Somfy Activites SA, 74300 Cluses (FR)
(72) Inventeur: FARGIER, Sylvain, 74300 Cluses (FR)
(74) Mandataire: Lavoix
(86) Numéro de dépôt international: PCT/EP2018/073581
(87) Numéro de publication internationale: WO 2019/043216

(56) Documents cités:
- HINDEN NOKIA S DEERING CISCO SYSTEMS R: "IP Version 6 Addressing Architecture; rfc4291.txt", IP VERSION 6 ADDRESSING ARCHITECTURE; RFC4291.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 février 2006 (2006-02-01), XP015054931,
- HUI J ET AL: "Compression Format for IPv6 Datagrams over IEEE 802.15.4-Based Networks; rfc6282.txt", COMPRESSION FORMAT FOR IPV6 DATAGRAMS OVER IEEE 802.15.4-BASED NETWORKS; RFC6282.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 septembre 2011 (2011-09-07), pages 1-24, XP015081287,

## Description

La présente invention concerne un procédé de communication mis en œuvre dans un système domotique pour un bâtiment, et un système domotique associé.

Plus généralement, l'invention se rapporte au domaine des automatismes pour les bâtiments, aussi bien pour les bâtiments à usage commercial que les bâtiments à usage résidentiel, qu'ils soient individuels ou collectifs.

Il existe de nombreux bâtiments pourvus d'équipements commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures). Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont commandés par un système de supervision programmable, afin d'assurer un meilleur confort des occupants du bâtiment ou encore d'optimiser la consommation d'énergie. Ces applications sont désignées sous le terme « Gestion Technique du Bâtiment» ou, plus généralement, sous l'expression « Building Automation Systems » en langue anglaise. Dans le résidentiel, les automatismes sont plus souvent désignés par le terme de « domotique ». Pour simplifier, par la suite, le terme domotique sera utilisé pour désigner autant des applications résidentielles que tertiaires.

Typiquement, les équipements d'un même bâtiment sont connectés à une unité de commande, qui a pour fonction de superviser ces équipements et d'en piloter le fonctionnement. Cette connexion est souvent réalisée en raccordant les équipements, par des liaisons filaires, à un bus de données commun, tel qu'un bus multipoints autorisant une connexion bidirectionnelle, par exemple de type RS485. Ce bus de données est relié à l'unité de commande, de manière à former un réseau qui autorise l'échange de données entre les équipements et l'unité de commande.

Une telle situation présente cependant des inconvénients.

D'une part, elle offre une flexibilité limitée, car toute modification postérieure à l'installation nécessite de recâbler le réseau, que ce soit pour ajouter de nouveaux équipements ou pour modifier leur répartition dans le bâtiment. Cela oblige à mettre en œuvre des travaux pouvant être longs et coûteux et nécessitant l'intervention de techniciens spécialisés.

D'autre part, cette situation connue présente des limites en termes de nombre d'équipements pouvant être accueillis sur le réseau. Par exemple, les solutions de type RS485 actuellement utilisées présentent des capacités d'adressage limitées, par exemple permettant de connecter au maximum 255 équipements sur un même bus. Cette limite est rédhibitoire lorsqu'il s'agit d'équiper des bâtiments de grande taille et/ou comprenant un grand nombre d'équipements à gérer. Or, les applications contemporaines rendent nécessaire de pouvoir gérer un grand nombre d'équipements, par exemple dans le cadre de l'internet des objets.

En outre, l'architecture de ces réseaux connus peut conduire à l'apparition de temps de latence élevés lors de la communication entre un équipement et l'unité de commande. Cela s'explique notamment par le fait que la commande est centralisée et que les informations émises par les équipements doivent remonter vers le bus pour être traitées par l'unité de contrôle. Or, pour certaines applications, un temps de latence trop élevé peut être préjudiciable au bon fonctionnement de l'équipement.

Pour remédier à ces inconvénients, il est proposé d'améliorer le système domotique en ajoutant une architecture de réseau de communication hiérarchique, permettant de gérer un grand nombre d'équipements, chaque équipement étant un élément communicant du système domotique, tout en présentant une flexibilité d'installation et d'évolution accrue.

La connexion des divers équipements dans un système domotique de bâtiment se fait dans une phase d'installation, et il est courant d'effectuer des connexions localement, par portions d'un bâtiment, avant d'installer les équipements réseau, passerelles et routeurs, qui permettent une connexion au réseau principal et une configuration complète des adresses réseau permettant un adressage effectif de chaque élément communicant du réseau.

Les standards de l'IETF RFC4291, "IP Version 6 Addressing Architecture", et RFC6282, "Compression Format for IPv6 Datagrams over IEEE 802.15.4-Based Networks" montrent comment des éléments communicants peuvent se connecter à un réseau de communication, avec ou sans compression de l'entête de l'IPv6.

Cependant, même dans la phase d'installation, il est utile de communiquer avec les équipements domotiques déjà installés localement, avant une configuration complète du réseau.

L'invention apporte une solution à ce problème, permettant les communications à la fois en mode configuré et non configuré, préalablement à une connexion au réseau principal.

A cet effet, l'invention concerne un procédé de communication mis en œuvre dans un système domotique pour bâtiment conforme à la revendication 1.

Avantageusement, l'invention permet d'utiliser le même protocole de communication pour communiquer, avant configuration de l'adresse réseau d'un élément communicant et après la configuration de cette adresse réseau.

Le procédé de communication selon l'invention peut également présenter une ou plusieurs des caractéristiques récitées dans les revendications dépendantes 2 à 9, prises indépendamment ou selon toutes combinaisons techniquement acceptables.

Selon un autre aspect, l'invention concerne un système domotique pour un bâtiment selon la revendication 10.

D'autres caractéristiques et avantages de l'invention ressortiront de la description qui en est donnée ci-dessous, à titre indicatif et nullement limitatif, en référence aux figures annexées, parmi lesquelles :
- la figure 1 est une représentation schématique d'un bâtiment comprenant un système domotique selon un mode de réalisation de l'invention ;
- la figure 2 est une représentation schématique d'un réseau de communication hiérarchique pour connecter des équipements d'un système domotique dans un mode de réalisation ;
- la figure 3 est une représentation schématique d'une interface réseau d'un équipement domotique appartenant au réseau de communication de la figure 2 ;
- la figure 4 est une représentation schématique d'un équipement réseau appartenant au réseau de communication de la figure 2
- la figure 5 est une représentation schématique d'un exemple de structure d'adresse réseau pour identifier les éléments communicant d'un réseau de communication hiérarchique;
- la figure 6 est un synoptique des étapes, d'une connexion d'une partie de réseau de communication non configuré à une autre partie de réseau de communication déjà configurée ou à une liaison dorsale 20 ;
- la figure 7 est une représentation schématique d'un en-tête de message émis dans un mode de réalisation ;
- la figure 8 est un synoptique des étapes de réception d'un message par un élément réseau non configuré selon un mode de réalisation.

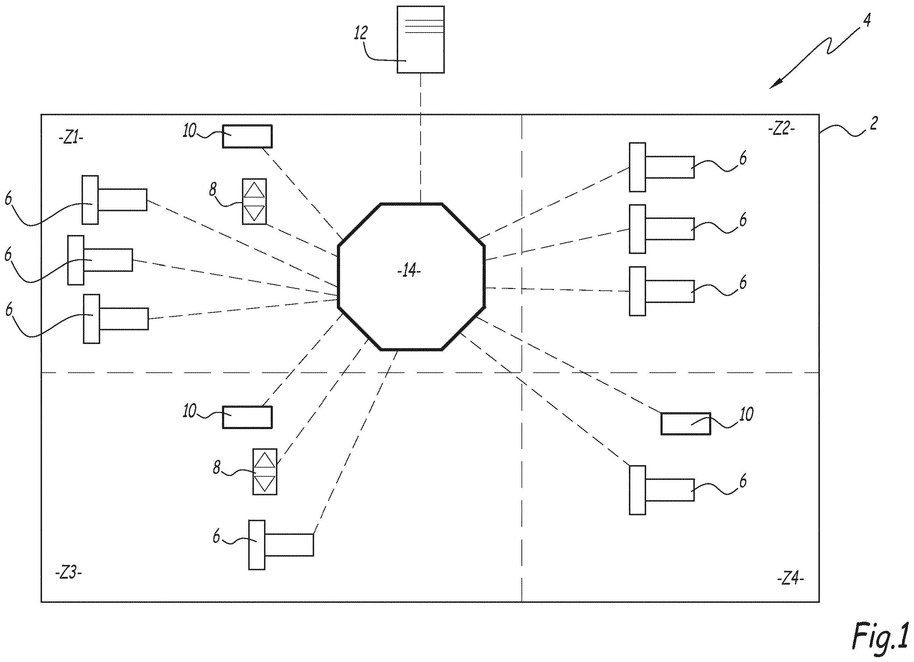

La **figure 1** représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et/ou de gestion d'énergie du bâtiment 2, comme le chauffage, la ventilation et la climatisation, ainsi que des fonctions de gestion de l'éclairage, de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10.

Le système de commande comporte notamment une unité de commande 12 programmable et un réseau de communication 14, interne au bâtiment 2, le réseau de communication 14 étant agencé pour permettre la communication des équipements domotiques du système domotique 4 avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions spatiales du bâtiment 2 qui sont situées à l'intérieur et/ou l'extérieur de ce bâtiment et qui sont destinées à recevoir chacune une partie des équipements domotiques du système domotique 4.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2. Ces zones peuvent également correspondre à des façades ou des parties de façade comme une partie de façade correspondant à un même étage.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique commandable 6 comporte un actionneur pilotable au moyen d'au moins un signal de commande.

Les appareils domotiques commandables 6 sont ici illustrés de façon identique. Toutefois, ils peuvent présenter des différences entre eux et assurer des fonctions différentes au sein du système domotique 4.

Par exemple, l'actionneur de l'appareil domotique commandable 6 comprend un moteur électrique couplé avec une charge mécanique et agencé pour déplacer et/ou régler un élément du bâtiment 2.

Selon un exemple, la charge mécanique de l'appareil domotique commandable 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil domotique commandable 6 est un compresseur adapté pour mettre en œuvre un cycle de détentecompression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil domotique commandable 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée.

En variante, l'actionneur de l'appareil domotique commandable 6 peut piloter un dispositif de commutation électrique, afin de commander l'allumage et l'extinction d'une source lumineuse, telle qu'une batterie de lampes au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Chaque point de commande 8 est destiné à recevoir des instructions de pilotage de la part d'un utilisateur du bâtiment 2, en vue de piloter, directement ou indirectement, un ou plusieurs des appareils domotiques commandable 6 et/ou de piloter l'unité de commande 12.

A cet effet, chaque point de commande 8 comporte ici une interface hommemachine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

Les points de commande 8 peuvent se présenter sous la forme d'une télécommande portative associée à un récepteur fixe ou, en variante, d'un terminal de commande fixe solidarisé à un mur du bâtiment 2.

Chaque capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 12. L'installation domotique 4 peut également comprendre un ou plusieurs capteurs indépendants.

Par exemple, les grandeurs physiques mesurées par les capteurs 10 sont, de façon non limitative, une température, par exemple une température d'un mur ou de l'air ambiant, un taux d'humidité, une valeur de luminosité, une valeur de pression de l'air ambiant, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

A titre d'exemple illustratif, sur la figure 1, la zone Z1 comporte trois appareils domotiques commandables 6, un point de commande 8 et un capteur 10. La zone Z2 comporte trois appareils domotiques commandables 6. La zone Z3 comporte un appareil domotique commandable 6, un point de commande 8 et un capteur 10. La zone Z4 comporte un appareil domotique commandable 6 et un capteur 10.

Chaque équipement domotique du système domotique 4, dont notamment les appareils domotiques commandables 6, les points de commande 8 et les capteurs 10, est connecté à l'unité de commande 12 par l'intermédiaire du réseau de communication 14 et comporte à cet effet une interface réseau 40 pour se connecter à ce réseau de communication 14. L'unité de commande 12 comporte également une interface réseau 40.

Par exemple, chaque appareil domotique commandable 6 reçoit des signaux de commande par l'intermédiaire du réseau de communication 14. Chaque point de commande 8 transmet les instructions de pilotage reçues par l'intermédiaire du réseau de communication 14. Chaque capteur 10 envoie les informations mesurées par l'intermédiaire du réseau de communication 14.

La communication s'effectue selon un protocole de communication donné.

Par exemple, la communication s'effectue par un échange de messages, par exemple sous forme de paquets, ces messages contenant chacun un en-tête, qui inclut une destination du message, et des données utiles, comme un ordre de commande ou une valeur de grandeur physique mesurée par un capteur.

De préférence, le protocole de communication utilisé est un protocole IP (« Internet Protocol »), par exemple le protocole IPv6. En variante, le protocole de communication est le protocole IPv4.

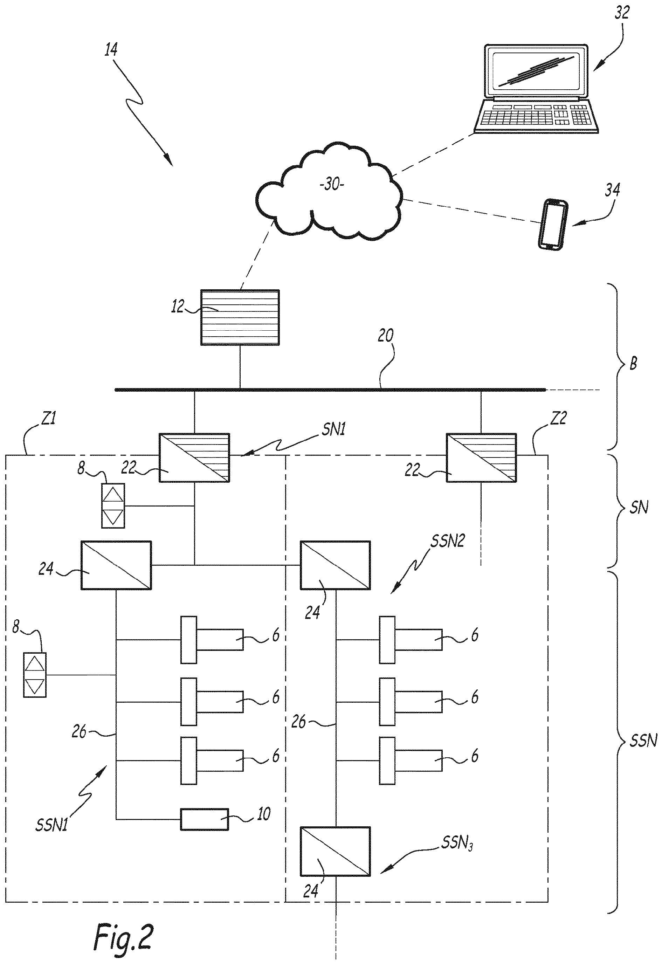

La **figure 2** représente plus en détail l'exemple du réseau de communication 14 de la figure 1. Pour faciliter la lecture de cette figure 2, les équipements domotiques 6, 8, 10 associés aux zones Z3 et Z4 du bâtiment 2 n'y sont pas illustrés.

Le réseau de communication 14 est un réseau hiérarchique à plusieurs niveaux de hiérarchie, également appelé rang. Il comporte un réseau principal B, qui comprend notamment un bus de données commun, formant une liaison physique dorsale 20, aussi dite « backbone » en langue anglaise, à laquelle l'unité de commande 12 est connectée.

Par exemple, la liaison physique dorsale 20 est une liaison câblée de type Ethernet (norme IEEE 802.3), par exemple Ethernet 100Mbit/s ou supérieur.

Le réseau de communication 14 comporte également au moins un sous-réseau, noté de façon générique par la référence SN. Ce sous-réseau comporte un équipement réseau 22, 24, qui est directement connecté à la liaison dorsale 20 par l'intermédiaire d'une interface réseau 40 et qui forme la tête de ce sous-réseau SN.

Il peut s'agir d'un équipement réseau d'interconnexion, également appelé passerelle 22, destiné à interconnecter deux parties de réseaux distinctes, par exemple, de technologies différentes. Il peut également s'agir d'un routeur 24 lorsque le réseau principal B et le sous-réseau SN sont de même nature.

Le terme routeur désigne un outil matériel et logiciel formant un élément intermédiaire dans un réseau et dirigeant des données, par exemple sous forme de paquets de données, entre une et plusieurs parties du réseau. La direction donnée aux données, ou routage, est réalisée selon un ensemble de règles formant une table de routage.

Le terme passerelle désigne un routeur particulier, qui assure en plus des fonctions de routage, également une fonction de traduction des messages circulant sur le réseau, dans la mesure où les moyens physiques et/ou les protocoles diffèrent entre deux parties de réseau.

En d'autres termes, le rôle des équipements réseau routeur et passerelle est de faire transiter des paquets d'une interface réseau 40 vers une autre selon un ensemble de règles formant une table de routage.

Dans l'exemple de la figure 2, deux passerelles 22 sont connectées à la liaison dorsale 20, formant ainsi deux sous-réseaux SN1 et SN2 distincts. Seul l'un de ces deux sous-réseaux, portant la référence SN1, est décrit dans ce qui suit.

En variante, le nombre de sous-réseaux SN peut être différent.

Les sous-réseaux SN sont directement connectés au réseau principal par l'intermédiaire de passerelles, et ont un premier rang associé dans le réseau hiérarchique.

Chaque sous-réseau SN contient au moins un équipement domotique 6, 8, 10 du système domotique 4, connecté à la passerelle 22 correspondante par l'intermédiaire d'une liaison physique 26, de préférence câblée.

Le réseau de communication 14 comporte en outre des sous-sous-réseaux de rang inférieur à celui des sous-réseaux SN, et sont notés de façon générique par la référence SSN.

Chaque sous-sous-réseau SSN comporte un équipement réseau, avantageusement un routeur 24, le connectant à un sous-réseau SN ou à un sous-sous-réseau de niveau hiérarchique supérieur au sien. L'équipement réseau 22, 24, forme la tête de ce sous-sous-réseau SSN. On l'appelle également équipement réseau de tête.

En référence à l'exemple de la figure 2, si un rang « n » est associé au sous-réseau SN1, chaque sous-sous-réseau SSN1 et SSN2 a un rang « n-1 » associé, et le sous-sous-réseau SSN3 a un rang « n-2 ».

Chaque routeur 24 tête de sous-sous-réseau de rang « n-1 » est connecté à une passerelle 22 par l'intermédiaire d'une liaison physique 26, de préférence câblée.

Lorsque le réseau de communication 14 comporte plusieurs niveaux de hiérarchie, chaque équipement réseau 22, 24 tête de sous-sous-réseau de rang « n-k », avec k supérieur ou égal à 2, est connecté à un routeur 24 de rang supérieur « n-k+1 », par l'intermédiaire d'une liaison physique 26, de préférence câblée.

Dans un mode de réalisation, le réseau hiérarchique peut comprendre jusqu'à douze niveaux de hiérarchie, en incluant celui du réseau principal B.

Chaque sous-sous-réseau SSN comporte un ou plusieurs équipements domotiques 6, 8, 10, connectés au routeur 24 correspondant par l'intermédiaire d'une liaison physique 26, chaque équipement domotique étant connecté à la liaison physique 26 à l'aide de son interface réseau 40. Les équipements domotiques connectés, via une même liaison physique 26, à un même routeur 24 sont ici dits faire partie d'un même sous-réseau local.

De préférence, les sous-réseaux SN et chaque sous-sous-réseaux SSN de rang inférieur à celui du sous-réseau SN sont associés chacun à une zone du bâtiment 2.

Un sous-réseau SN et/ou un sous-sous-réseau SSN est dit « associé » à une zone Z1, Z2, Z3, Z4 du bâtiment 2 lorsque les équipements domotiques 6, 8, 10 appartenant à ce sous-réseau sont eux-mêmes associés à cette zone, par exemple parce qu'ils sont physiquement localisés à l'intérieur de cette zone Z1, Z2, Z3, Z4 du bâtiment 2.

Le nombre et la structure des sous-réseaux SN et des sous-sous-réseaux SSN, ainsi que leur association aux zones du bâtiment 2, sont de préférence choisis en fonction de la configuration du bâtiment 2 et des fonctionnalités remplies par le système domotique 4.

De préférence, la liaison physique 26 qui connecte les équipements réseau 22, 24 entre eux et qui les connecte aux équipements domotiques 6, 8, 10 est un bus de données série multipoints de type RS485.

L'utilisation d'une liaison physique 26 de type RS485 présente des avantages dans ce réseau de communication 14, car elle rend possible l'utilisation de bus de données de grande longueur, par exemple jusqu'à 1km de long, sans trop dégrader la qualité du signal qui y circule. La limitation du nombre d'équipements domotiques 6, 8, 10 et/ou d'équipements réseaux 22, 24 connectés sur une même liaison physique 26 n'est pas pénalisante, grâce à l'architecture hiérarchique qui permet de connecter un nombre important de sous-réseaux.

Sur la figure 2, les passerelles 22 sont des équipements réseau d'interconnexion entre un bus de données Ethernet et un bus RS485.

De façon optionnelle, l'unité de commande 12 est adaptée pour être connectée à un réseau de données extérieur 30, tel que le réseau internet, indépendamment du réseau de communication 14.

De cette manière, l'unité de commande 12 peut communiquer avec un serveur informatique distant connecté à ce réseau extérieur 30, par exemple pour envoyer des rapports sur l'état de fonctionnement du système domotique 4 à des fins de diagnostic, ou encore pour recevoir des instructions de pilotage. L'unité de commande 12 peut également communiquer par le réseau extérieur 30 avec un ou plusieurs utilisateurs distants par exemple pourvus d'un terminal de communication comme un ordinateurs 32, un appareil de téléphonie mobile intelligent ou « *smartphones* » en langue anglaise, une tablette tactile ou tout autre équipement équivalent.

Le réseau de communication 14 est adapté pour fonctionner suivant un protocole de communication prédéfini, tel que le protocole IP, afin d'assurer une communication entre les éléments communicants du système domotique 4 qui sont connectés à ce réseau de communication 14.

Dans le mode de réalisation préféré, le protocole de communication utilisé est le protocole IPv6.

Ce protocole de communication est ici implémenté à l'aide des interfaces réseau qui équipent les divers équipements domotiques 6, 8, 10 et équipements réseau 22, 24 du système domotique 4 qui sont connectés par le réseau de communication 14, notamment grâce à leur interface réseau.

Par la suite, on désignera par le terme générique « élément communicant », les équipements réseau 22, 24 et les équipements domotiques 6, 8, 10.

Les routeurs 24 et la ou les passerelles 22 comportent des interfaces réseau spécifiques. Par exemple, ces interfaces réseau implémentent chacune une pile de protocole, c'est-à-dire un empilement de couches de protocole, chaque couche de protocole s'appuyant sur celles qui sont en dessous afin d'y apporter un supplément de fonctionnalité.

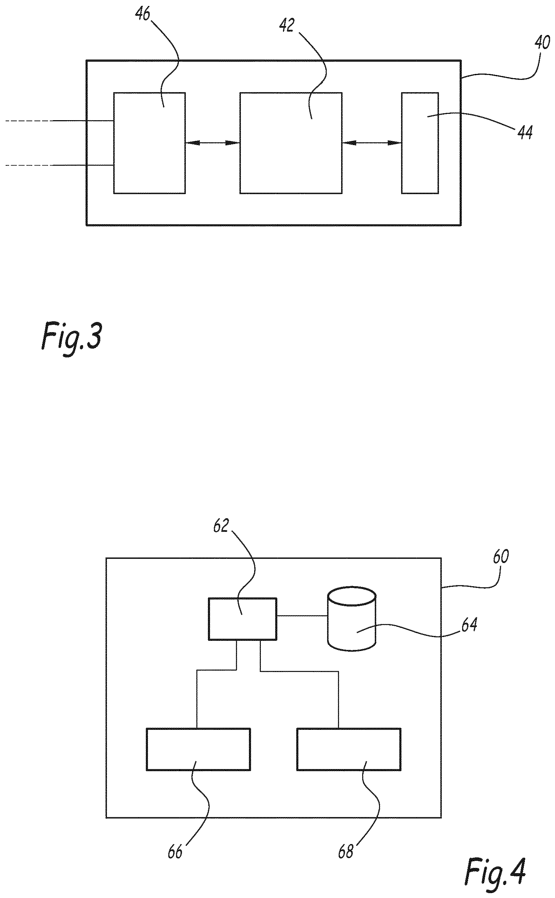

La **figure 3** représente de façon schématique l'interface réseau d'un élément communicant. L'interface réseau d'un élément communicant a pour fonction de connecter cet élément communicant à un ou plusieurs réseaux de communication. Elle lui permet ainsi de communiquer avec les autres éléments communicants du ou des réseaux auquel il est connecté.

Comme illustré sur la figure 3, chaque interface réseau 40 comporte un contrôleur réseau 42, une mémoire 44 et un module d'entrée-sortie 46, aussi nommé « transceiver » en langue anglaise, le module d'entrée-sortie 46 étant ici pourvu d'un connecteur agencé pour raccorder physiquement le module d'entrée-sorties 46 à une couche physique du réseau de communication 14.

Dans cet exemple, la couche physique du réseau de communication 14 est en partie formée par les liaisons physiques 26.

Le contrôleur réseau 42 comporte un calculateur électronique, par exemple un ou plusieurs processeurs, microprocesseurs ou tout autre moyen équivalent, programmé pour assurer le traitement des données transitant par le réseau de communication 14 et par le connecteur du module d'entrée-sortie 46.

Par exemple, le contrôleur réseau 42 est programmé pour traiter automatiquement les données reçues par le module d'entrée-sortie 46 et étant destinées à l'interface réseau 40. Le traitement peut par exemple consister à extraire et décoder le contenu de paquets reçus par l'interface réseau et/ou transmettre ce contenu à l'équipement domotique auquel il est associé.

De façon complémentaire, le contrôleur réseau 42 est programmé pour préparer automatiquement les données émises par l'équipement domotique auquel il est associé, en vue de leur envoi vers un ou plusieurs équipements domotiques connectés au réseau de communication 14.

Enfin, le contrôleur réseau 42 est adapté à mettre en œuvre des instructions de code de programme permettant d'exécuter des étapes du procédé de communication selon l'invention.

La mémoire 44 contient ici une adresse réseau 50, une partie d'adresse réseau ou au moins un identifiant, permettant d'identifier de façon unique l'interface réseau 40 sur le réseau de communication 14 et qui identifie donc l'équipement domotique correspondant sur le réseau de communication 14. L'interface réseau 40 est ici compatible avec le standard IPv6, c'est-à-dire apte à implémenter le protocole réseau IPV6.

En outre, la mémoire 44 contient avantageusement des instructions de code de programme exécutables pour assurer le fonctionnement précédemment décrit du contrôleur réseau 42.

La **figure 4** représente schématiquement un équipement réseau 60 générique destiné à être utilisé dans le réseau de communication 14. L'équipement réseau 60 générique correspond par exemple à une passerelle 22 ou à un routeur 24.

Cet équipement réseau 60 comporte un dispositif programmable de calcul 62, comportant un ou plusieurs processeurs, une mémoire 64, une première interface réseau 66 et une deuxième interface réseau 68. La première interface réseau 66 est par exemple destinée à être connectée à un premier sous-sous-réseau, alors que la deuxième interface réseau 68 est destinée à être connectée à un deuxième sous-sous-réseau, de rang inférieur au premier sous-sous-réseau. Les première et deuxième interfaces réseau 66, 68 sont, par exemple, chacune physiquement similaires à l'interface 40 décrite en référence à la figure 3.

Chaque interface réseau de l'équipement réseau 60 comporte au moins une adresse réseau 50 qui sera décrite plus en détail ci-après.

Le dispositif programmable 62 est adapté à mettre en œuvre des instructions de code de programme permettant d'exécuter des étapes du procédé communication selon l'invention. Ces instructions de code de programme peuvent, par exemple, être stockées dans la mémoire 64 de l'équipement réseau.

Le dispositif programmable 62 est en outre programmé pour assurer un routage des paquets de données arrivant depuis la partie de réseau associée à l'une ou l'autre des première et deuxième interfaces réseau 66, 68 vers une partie du réseau de communication 14 connectée à l'autre interface réseau 66, 68, en fonction de la destination de ces paquets de données. A cet effet, l'équipement 60 comporte ici une table de routage, par exemple enregistrée au sein de la mémoire 64. Cette table de routage contient la liste de toutes les routes connues du réseau de communication 14.

Par exemple, si on se réfère au mode de réalisation de la figure 2, dans le cas d'un routeur 24, les première et deuxième interfaces réseau 66, 68 sont ici compatibles avec les bus de données de type RS485.

Une passerelle 22 présente un fonctionnement semblable à celui de équipement réseau 60 décrit ci-dessus, sauf qu'une des deux interfaces réseau 66, 68 est connectée avec la liaison dorsale 20.

En variante, un équipement réseau 60 a une interface réseau 66 destinée à une connexion amont (en anglais « uplink ») avec un équipement réseau de niveau de hiérarchie supérieur à celui de l'équipement réseau 60, et plusieurs interfaces 68 destinés aux connexions aval (en anglais « downlink ») avec des équipements réseau de niveau de hiérarchie inférieur à celui de l'équipement réseau 60.

Le protocole de communication utilisé par le réseau de communication 14 permet d'assurer l'adressage des messages échangés entre les éléments du système domotique 4.

Par exemple, lorsqu'un premier élément communicant du système domotique 4, tel qu'un point de commande 8, doit envoyer des données à destination d'un deuxième élément communicant du système domotique 4, tel qu'un appareil domotique commandable 6, alors le premier élément communicant (appelé source) génère un message contenant les données à envoyer et contenant l'adresse du deuxième élément communicant (appelé destinataire). Le message est ainsi routé au sein du réseau de communication 14 de l'élément communicant source jusqu'à atteindre le ou les éléments communicants destinataires.

Plus précisément, un message échangé entre des éléments communicants du réseau appartenant au même sous-réseau local ou au même sous-sous-réseau local transite par l'intermédiaire de la liaison physique 26 à laquelle sont connectés les éléments communicants du réseau. Un message échangé entre des éléments communicants du réseau n'appartenant pas au même sous-réseau local ou au même sous-sous-réseau local est routé au moyen du routeur 24 tête du sous-réseau local auquel est connecté l'élément communicant source, qui le redirige vers le sous-réseau auquel est connecté chaque élément communicant destinataire, éventuellement par l'intermédiaire des équipements réseau 22 et de la liaison dorsale 20.

Chaque équipement réseau 22, 24 et chaque élément communicant 6, 8, 10 du réseau de communication 14 possède au moins une interface réseau 40 ayant une adresse réseau 50.

Par la suite, on assimilera l'adresse réseau 50 de l'interface réseau 40 d'un élément communicant à l'adresse réseau 50 de cet élément communicant.

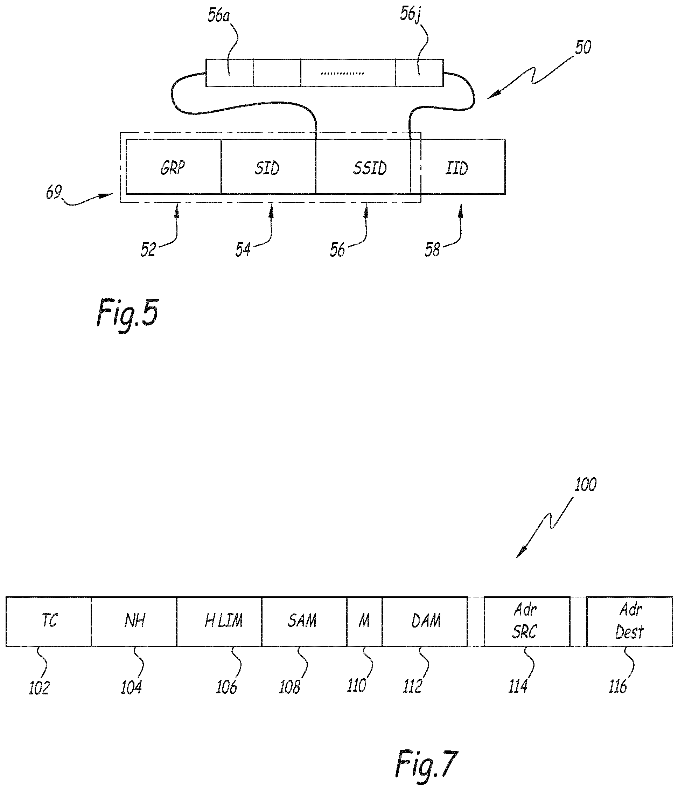

La **figure 5** représente de façon schématique un exemple d'adresse réseau de type point à point (*« unicast »* en langue anglaise) permettant de définir de manière unique un élément communicant.

L'adresse réseau 50 comporte plusieurs champs d'adressage référencés respectivement 52, 54, 56 et 58, les champs d'adressage correspondant à des niveaux de hiérarchie différents et successifs du réseau de communication 14 hiérarchique de communication.

Le champ d'adressage référencé 52, associé au niveau de hiérarchie le plus élevé du réseau de communication 14, contient un préfixe de site GRP pour « Global Routing Prefix », qui identifie le réseau de communication 14 dans son ensemble. Typiquement, un préfixe de site GRP unique est attribué au système domotique 4 d'un bâtiment 2.

Le préfixe de site GRP est préconfiguré de façon manuelle dans tous les équipements réseau 22, 24 destinés à être connectés sur la liaison dorsale 20. Il peut être enregistré dans une mémoire 64 de l'équipement réseau 22, 24, par exemple, une mémoire 44 de son interface réseau 40. Le préfixe de site GRP ne peut être modifié que de façon manuelle. Il correspond au niveau de hiérarchie le plus haut dans le réseau de communication 14.

Le champ d'adressage référencé 54 contient un identifiant de sous-réseau SID pour « Subnet IDentifier », qui identifie le sous-réseau SN de rang n, n étant un entier non nul, auquel appartient l'élément communicant considéré. A chaque sous-réseau SN connecté à la liaison dorsale 20 correspond un identifiant de sous-réseau SID différent.

Le champ adressage référencé 56 contient un identifiant de sous-sous-réseau SSID pour «Sub Subnet IDentifier », qui identifie le sous-sous-réseau SSN de rang inférieur à n auquel appartient l'élément communicant considéré.

Enfin, le champ d'adressage 58 contient un identifiant d'interface IID pour « Interface IDentifier », correspondant à l'identifiant unique de l'interface réseau 40 de l'élément communicant considéré. Dans un mode de réalisation il s'agit de l'adresse MAC, également appelée adresse physique, qui identifie de manière unique chaque interface réseau 40 d'un élément communicant. Cet identifiant est attribué à l'interface réseau 40 lors de sa fabrication. Il peut par exemple être stocké dans une mémoire 44 de l'interface réseau 40. Suivant un autre mode de réalisation le champ d'adressage 58 correspondant à l'identifiant d'interface IID peut être renseigné lors de la fabrication de l'interface réseau.

L'adresse réseau 50 est associée à un masque réseau pour distinguer le préfixe de réseau et l'adresse de machine. Ici l'adresse machine est l'identifiant de d'interface IID. Le préfixe de réseau comprend le préfixe de site GRP, l'identifiant de sous-réseau SID et l'identifiant de sous-sous-réseau SSID.

Lorsque le protocole de communication utilisé est le protocole IPv6, l'adresse réseau 50 d'un élément communicant 6, 8, 10, 22, 24 comporte au total 128 bits, soit 16 octets. Par exemple, le nombre d'octets alloué à chacun des champs d'adressage 52, 54, 56 et 58 est respectivement de 48 bits, 16 bits, 40 bits et 24 bits. De plus, le champ d'adressage 56 correspondant aux sous-sous-réseaux est typiquement découpé en sous-champs d'adressage 56a à 56j, permettant d'identifier plusieurs couches de sous-sous-réseaux. Chaque sous-champ d'adressage correspond à un niveau de hiérarchie différent du sous-sous-réseau SSN. Suivant un mode de mise en œuvre, le champ d'adressage 56 correspondant aux sous-sous-réseaux peut comprendre dix sous-champs d'adressage.

Lorsque le protocole de communication utilisé est le protocole IPv4, l'adresse réseau comporte au total 32 bits, soit 4 octets.

Une adresse réseau 50 est complètement configurée lorsque l'ensemble des différents champs d'adressage 52, 54, 56 et 58 sont renseignés, en fonction du niveau de hiérarchie du sous-réseau auquel appartient l'élément communiquant considéré.

Cependant, la configuration complète d'une adresse réseau 50, et en particulier du préfixe de réseau, nécessite de connaître la topologie du réseau de communication, et, pour un élément communicant à connecter en tant que nœud du réseau, de connaître les adresses des éléments communicants de niveau de hiérarchie supérieur à celui de l'élément communicant considéré dans le réseau hiérarchique.

A titre d'exemple, dans une phase d'installation d'un système domotique, certaines parties du réseau de communication 14 peuvent ne pas être configurées. Ce peut être le cas lorsqu'une ou plusieurs passerelles 22 ne sont pas connectées à la liaison dorsale 20 et/ou lorsqu'un ou plusieurs routeurs 24 ne sont pas connectés à une partie de réseau de communication déjà configurée. Dans ces cas de figure, les adresses réseau des différents éléments communicants appartenant à la partie de réseau non configurée sont incomplètes et aucune communication n'est possible.

Suivant une particularité de l'invention, avant la connexion d'une partie de réseau de communication non configurée à une liaison dorsale 20 ou à une autre partie de réseau de communication déjà configurée, les éléments communicants appartenant à la partie de réseau de communication non configurée peuvent communiquer en couche 3 du modèle OSI (pour « *Open Systems Interconnection* » en anglais), ou couche réseau, dans un mode de communication particulier appelé mode non-configuré grâce à la mise en œuvre du procédé de communication selon l'invention. Ceci est rendu possible notamment par le fait qu'une partie de l'adresse réseau de chaque élément communicant est dérivée de son adresse physique.

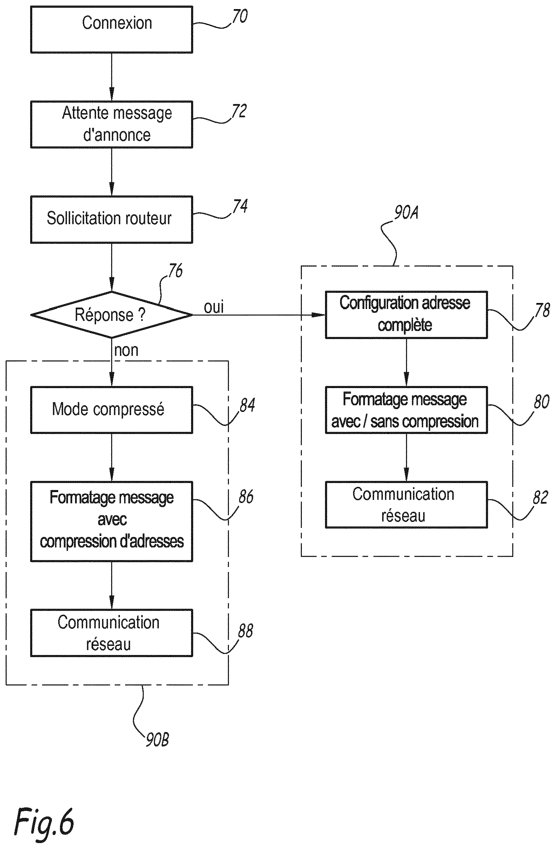

La figure 6 est un synoptique des principales étapes d'une connexion d'une partie de réseau de communication non configuré à une autre partie de réseau de communication déjà configurée ou à une liaison dorsale 20.

Lors d'une première étape 70, un équipement domotique 6, 8 ou 10 comportant une interface réseau 40, formant un élément communicant E1, est connecté au réseau de communications 14.

Dans une phase d'installation du système domotique, il est possible que le réseau ne soit pas entièrement câblé, et donc que certains équipements réseau, routeur 24 ou passerelle 22, ne soient pas connectés.

En pratique, l'élément communicant E1 est connecté à une liaison physique 26, sur laquelle peuvent être connectés plusieurs équipements domotiques, formant un sous-réseau local.

La connexion 70 est suivie d'une phase de sollicitation pour obtenir une adresse réseau pour l'élément communicant E1. Cette phase de sollicitation comprend les étapes 72 à 76 décrites ci-après.

L'étape de connexion 70 est suivie d'une première étape d'attente 72, de durée d'attente prédéterminée, de message d'annonce d'adresse réseau en provenance d'un routeur 24 ou d'une passerelle 22 situés en amont dans le réseau hiérarchique, comprenant des identifiants réseau GRP, SID ou SSID permettant de former l'adresse réseau 50 de l'élément communicant E1.

En l'absence de réception d'un message d'annonce d'adresse réseau, l'élément communicant E1 peut optionnellement envoyer une sollicitation 74 d'adresse réseau routeur destinée aux équipements réseau amont dans le réseau hiérarchique.

Une réponse est attendue lors d'une deuxième étape d'attente 76, de durée prédéterminée.

En cas de réception d'une réponse, l'élément communicant E1 peut communiquer dans un mode de communication configuré 90A.

A cet effet, l'élément communicant E1 effectue une étape 78 de configuration de son adresse réseau 50, la réponse obtenue permettant de renseigner les champs d'adressage 52, 54, 56 formant le préfixe de réseau de l'adresse réseau 50. Optionnellement, l'étape 78 de configuration d'adresse met en œuvre une négociation d'adresse réseau, conformément au protocole de communication implémenté.

Ensuite, l'élément communicant E1 est capable de formater des messages (étape 80) pour des communications 82 en mode configuré avec tout élément communicant déjà connecté au réseau 14.

Il est à noter qu'une communication en mode configuré peut utiliser tout mode de compression d'adresse parmi les modes décrits en détail ci-après.

En cas d'absence de réception d'une réponse à la deuxième étape d'attente 76, l'élément communicant E1 se trouve dans l'impossibilité de configurer son adresse réseau. Une telle situation se présente notamment lorsque le sous-réseau local auquel appartient l'élément communicant E1 n'est pas encore connecté au réseau principal via une passerelle 22 ou lorsqu'il n'est pas connecté à une partie de réseau de communication déjà configuré via un équipement réseau comme un routeur 24.

Selon une particularité de l'invention, la communication en utilisant le même protocole de communication, en mode non-configuré 90B, est néanmoins rendue possible entre éléments communicants appartenant au même sous-réseau local.

En l'absence de réponse, l'étape 76 est suivie d'une étape 84 de mise en place des communications utilisant un mode de compression d'adresses, avec ou sans omission d'identifiant, décrit ci-après.

Suivant un mode de mise en œuvre, les messages ont un en-tête 100 de 2 octets tel qu'illustré schématiquement sur la **figure 7****.**

L'en-tête de message comprend plusieurs champs de tailles prédéterminées.

Le champ 102 comprend 3 bits adaptés à indiquer la classe de trafic TC. Ce champ est utilisé de manière classique ici.

Le champ 104 comprend 3 bits adaptés à indiquer le type du prochain en-tête NH, utilisé également de manière classique.

Le champ 106 comprend 5 bits adaptés à indiquer le nombre maximal de « sauts » HLIM entre équipements réseau qu'un paquet est autorisé à effectuer. La valeur de ce champ 106 est décrémentée d'une unité par chaque équipement réseau que le paquet traverse. Une valeur maximale « Max Hop Limit » permet d'atteindre la totalité du réseau.

Le champ 108, qui est un champ d'indication d'adresse réseau source, comprend un indicateur de mode de compression de l'adresse de l'élément communicant source du message, de longueur égale à 2 bits dans ce mode de réalisation. Ce champ est appelé SAM pour « *Source Address Mode* ».

Suivant un mode de mise en œuvre, le champ SAM peut prendre la valeur « 00 », qui indique une communication sans compression dans laquelle l'adresse réseau de l'élément communicant source complète est transportée dans l'en-tête du message.

Le champ SAM peut prendre des valeurs respectives « 01 » et « 10 » qui indiquent une compression partielle de l'adresse réseau de l'élément communicant source. Dans les modes de compression partielle, une partie des bits du préfixe de réseau associé à l'adresse réseau est transportée dans l'en-tête du message, et l'autre partie de l'adresse réseau de l'élément communicant source est omise. Lors de la décompression, la partie de l'adresse réseau omise est déduite du contexte de l'interface réseau sur laquelle le message est reçu. On appelle ici contexte le préfixe de réseau associé à l'adresse réseau de l'interface réseau de l'équipement réseau (22,24) sur lequel est reçu ou transmis un message. Le préfixe de réseau, comprend des champs d'adressage renseignés, de l'interface réseau de l'équipement réseau (22,24) considérée. L'utilisation d'un contexte de l'interface réseau suppose que l'élément communicant est branché dans une partie de réseau entièrement configurée.

Le champ SAM peut également prendre la valeur « 11 », indiquant une compression totale du préfixe de réseau de l'élément communicant source. Dans ce cas, seul l'identifiant d'interface IID est transmis. Suivant un mode de mise en œuvre particulier, l'intégralité de l'adresse réseau de l'élément communicant source est omise. Il s'agit du mode de compression totale d'adresse avec omission d'identifiant.

Le champ 110 de l'en-tête 100 comprend 1 bit, noté M, adapté à indiquer un mode d'adressage parmi les modes point à point (ou « *unicast* » en anglais) et multipoint (ou « *multicast* » en anglais). Ce dernier mode d'adressage est également appelé mode multidiffusion.

Par exemple, M=0 correspond à une communication de type « *unicast* » et M=1 à une communication de type « multicast ».

De manière connue, une communication de type « *unicast* » est adressée à un destinataire donné, alors qu'une communication « *multicast* » est adressée à un groupe de destinataires, tout élément communicant abonné à ce groupe de destinataires étant par conséquent destinataire du message.

Dans un mode de réalisation, un groupe global prédéterminé est défini. Par défaut, tous les éléments communicants du réseau de communication 14 sont abonnés à ce groupe global. Il est ainsi possible d'effectuer des communications de type « *multicast* » destinées a priori à l'ensemble des éléments communicants du réseau en utilisant ce groupe global.

Le champ 112, qui est un champ d'indication d'adresse réseau de destination, comprend un indicateur de mode de compression de l'adresse de destination, de longueur égale à 2 bits, indiquant un mode de compression appliqué à l'adresse réseau de l'élément ou des éléments communicant(s) destinataire(s) du message, appelé DAM pour « *Destination Address Mode* ».

Lorsque le message est un message de type point à point (M=0), de manière analogue au champ SAM, le champ DAM peut prendre la valeur « 00 » indiquant une absence de compression, des valeurs « 01 » ou « 10 » indiquant une compression partielle et la valeur « 11 » indiquant une compression totale de l'adresse réseau de l'élément communicant destinataire.

Lorsque le champ DAM prend la valeur « 11 », le préfixe de réseau de l'adresse réseau de l'élément communicant destinataire est omis et seul l'identifiant d'interface IID est transmis.

De manière analogue au champ SAM, dans un mode de compression totale d'adresse avec omission d'identifiant, l'intégralité de l'adresse réseau de l'élément communicant source peut être omise.

De manière analogue au mode point à point, dans un mode d'adressage de type multidiffusion, le champ DAM peut prendre les valeurs « 00 » à « 11 », indiquant respectivement une absence de compression, une compression partielle et une compression totale de l'adresse réseau de l'élément communicant destinataire. Cependant, dans ce mode d'adressage, le mode de compression ne dépend pas de la topologie du réseau de communication.

L'en-tête 100 comprend également un champ 114 contenant l'adresse réseau de l'élément communicant source, de longueur variable et pouvant être vide, en fonction du mode de compression indiqué dans le champ d'indication d'adresse réseau source 108.

L'en-tête 100 comprend également un champ 116 contenant l'adresse réseau de l'élément communicant de destination, de longueur variable et pouvant être vide, en fonction du mode de compression indiqué dans le champ d'adresse réseau de destination 112.

Lorsqu'une partie du réseau de communication n'est pas configurée, une communication entre éléments communicants appartenant à cette partie de réseau de communication est possible, de façon très restreinte, selon un mode d'adressage de type point à point ou multipoint. Pour que cette communication en couche 3 du modèle OSI soit possible même si cette couche n'est pas configurée, les éléments communicants non configurés sont agencés pour ne pas rejeter les messages contenant des adresses réseau source et/ou de destination incomplètes. Les éléments communicants savent qu'ils ne sont pas configurés. Par exemple, un indicateur booléen est maintenu à FAUX tant qu'une partie de leur adresse réseau, par exemple un champ d'adressage du préfixe de réseau, n'est pas renseignée.

Dans le mode de réalisation décrit en référence à la figure 6, pour tout message émis, le formatage 86 de l'en-tête de message comprend la mise à « 11 » des champs respectifs SAM 108 et DAM 112. Lorsque le message est émis en mode point à point, le préfixe de réseau pour les adresses de l'élément communicant source et de l'élément communicant destinataire est omis.

Le formatage de message comprend également le renseignement du mode d'adressage entre le mode point à point et le mode multidiffusion.

L'étape de formatage est suivie d'une étape de communication 88 des messages comprenant l'en-tête formaté et des données utiles, le traitement des messages étant effectué par le ou les éléments communicants destinataires comme expliqué plus en détail ci-après.

En mode point à point, la communication est très limitée, elle n'est possible qu'entre deux éléments communicants connectés à une même liaison physique 26.

Chaque message comprend un en-tête comprenant notamment l'adresse réseau de l'élément communicant source et celle de l'élément communicant de destination sous forme d'adresse réseau de type point à point comme illustré sur la figure 5. Dans ce mode de communication, le préfixe de réseau n'étant pas connu, le mode de compression d'adresse totale pour l'adresse réseau de l'élément communicant source et pour l'adresse réseau de l'élément communicant destinataire est imposé. Seuls les identifiants d'interface IID des éléments communicants source et de destination sont transmis dans l'en-tête. Ainsi, la partie de l'adresse réseau compressée correspond à celle qui n'est pas encore connue.

Suivant une variante de mise en œuvre, l'identifiant d'interface de chaque élément communicant est choisi égal à l'adresse MAC de l'élément communicant considéré.

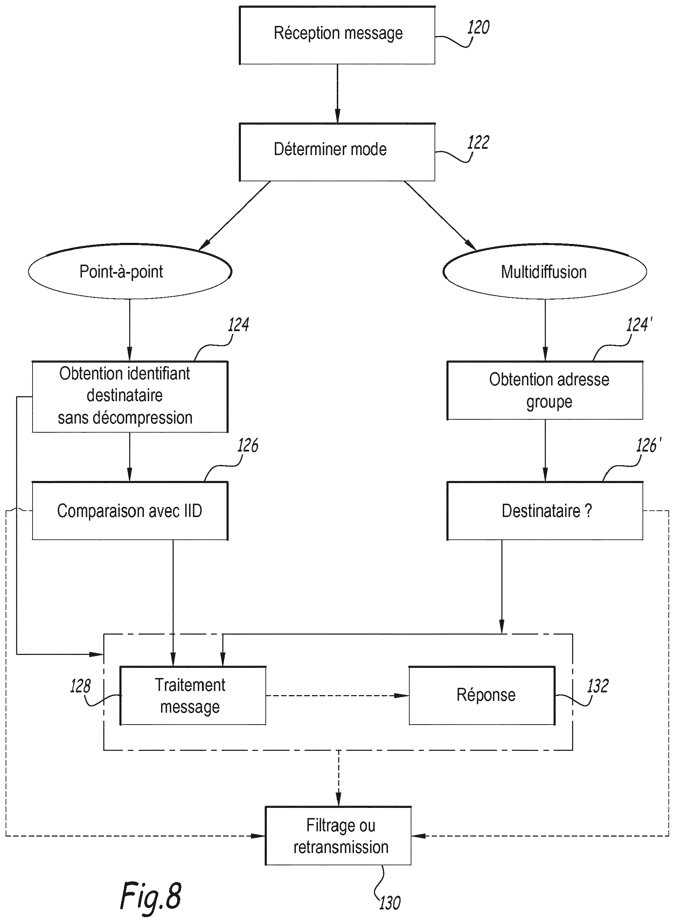

La réception d'un message par un équipement domotique récepteur appartenant à une partie de réseau non configurée est décrite ci-après, dans un mode de mise en œuvre, en référence à la **figure 8****.**

L'équipement domotique récepteur est par exemple un élément communicant ou un équipement réseau.

Après la réception 120 d'un message, l'élément communicant récepteur, appelé ici premier élément communicant, extrait 122 de l'en-tête du message l'indicateur de mode d'adressage parmi les modes point à point et multidiffusion.

L'en-tête de message est compressé car le mode de compression d'adresses réseau source et, le cas échéant, de destination, est mis en œuvre.

En mode point à point, le premier élément communicant met en œuvre une étape 124 d'obtention d'un identifiant de l'élément réseau destinataire.

Pour cela, l'élément communicant détermine si l'adresse de destination compressée comprend un identifiant, en d'autres termes si le mode de compression totale avec ou sans omission d'identifiant a été utilisé à l'émission.

Si le mode de compression totale sans omission a été utilisé, l'en-tête du message reçu comporte dans le champ 116 comportant l'adresse réseau de l'élément communicant de destination un identifiant d'interface. Cet identifiant d'interface est extrait à étape 124. L'extraction est donc obtenue sans décompression de l'adresse réseau.

Ensuite, à l'étape de comparaison 126, l'identifiant d'interface extrait est comparé à l'identifiant d'interface IID mémorisé dans une mémoire 44 de l'interface réseau du premier élément communicant. En d'autres termes, le premier élément communicant vérifie que son identifiant d'interface correspond à l'adresse de destination compressée.

Il est à noter que l'adresse de destination compressée est utilisée sans décompression.

Le message comprend également une adresse source compressée.

Lorsque le résultat de la comparaison est positif, c'est-à-dire lorsque l'identifiant d'interface IID est identique à l'identifiant d'interface extrait, le premier élément communicant en déduit qu'il est le destinataire du message. L'étape de comparaison 126 est suivie par une étape de traitement du message 128.

Lorsque le résultat de la comparaison est négatif, le premier élément n'est pas destinataire du message. L'étape de comparaison 126 est suivie d'une étape 130 de filtrage ou de retransmission du message décrite ci-après.

Suivant un mode de mise en œuvre particulier du procédé de communication, le message a été formaté avec un mode de compression d'adresses totale avec omission d'identifiant.

Dans ce mode, tous les champs d'adressage des adresses réseau de l'élément communicant source et/ou de l'élément communicant de destination sont omis. Le champ manquant, à savoir l'identifiant d'interface IID, est déduit de l'adresse physique. Ceci est rendu possible par le fait que l'adresse réseau de chaque élément communicant contient une partie qui est dérivée de l'adresse physique (ou adresse MAC pour « *Media Access Control* ») de l'élément communicant. La compression est maximale, l'information se trouvant en couche 2 du modèle OSI également nommée couche liaison.

Dans ce mode, le champ 116 comportant l'adresse réseau de l'élément communicant de destination un identifiant d'interface est vide.

L'obtention 124 d'un identifiant d'élément réseau destinataire comprend l'extraction de l'adresse MAC de l'élément communicant destinataire de la couche 2 du modèle OSI ou couche liaison.

Ensuite, à l'étape de comparaison 126, l'adresse MAC extraite est comparée à l'identifiant d'interface IID mémorisé dans une mémoire 44 de l'interface réseau du premier élément communicant. En d'autres termes, le premier élément communicant vérifie que son identifiant d'interface correspond à l'adresse de destination compressée.

Lorsque le premier élément communicant est un équipement réseau 22, 24 non configuré, dans un mode d'adressage point à point, de façon préférentielle, cet équipement réseau 22, 24 non configuré est agencés pour filtrer tous les messages qu'il reçoit. Par filtrage d'un message on entend ici le blocage du message, donc la nonretransmission du message vers une autre partie du réseau.

Du fait de la compression totale des adresses réseau des éléments communicants source et de destination, l'équipement réseau considère que le message a une portée limitée à la liaison physique. Ainsi, tous les messages envoyés en mode point à point au niveau d'une liaison physique 26 sont bloqués par l'équipement réseau et restent sur cette liaison physique.

Suivant une variante de réalisation, les équipements réseau non configurés peuvent être agencés pour ne filtrer aucun message et donc transmettre sur un port tous les messages qu'ils reçoivent sur l'autre port. Ils se comportent ainsi comme un concentrateur (ou « *hub* » en anglais). Dans cette variante, une communication sur l'ensemble du réseau de communication 14 devient possible. Cependant, un problème se pose si deux éléments communicants possèdent le même identifiant d'interface. En effet, dans ce cas de figure, un risque de collision existe, le message étant reçu par les deux éléments communicants ayant le même identifiant d'interface.

Il est à noter que contrairement à un mode de communication dans un réseau de communication configuré, les adresses réseau des éléments communicants source et de destination ne sont pas décompressées puis recompressées en fonction du contexte lorsqu'ils transitent par un équipement réseau. De façon différente, les messages sont transmis en conservant leur mode de compression totale, avec ou sans omission d'identifiant.

Le mode d'adressage du type point à point peut, par exemple, être utilisé pour communiquer avec un élément communicant à l'aide d'un dispositif de configuration. Après sa connexion au niveau d'une liaison physique 26, le dispositif de configuration peut dialoguer avec les éléments communicants présents sur cette liaison physique. Il peut, par exemple, programmer un élément communicant en lui envoyant un message contenant des données de configuration.

Lorsque l'indicateur de mode d'adressage extrait à l'étape 122 indique un mode d'adressage multidiffusion, l'en-tête du message comprend l'adresse de l'élément communicant source, sous la forme d'une adresse réseau de type point à point, et une adresse réseau de destination sous la forme d'une adresse de groupe.

L'adresse de groupe ne se compresse pas par rapport au contexte. Elle dépend du groupe d'éléments communicants auquel le message est adressé. Seule l'adresse source est compressée. Comme énoncé précédemment, le préfixe de réseau n'étant pas connu, l'adresse réseau de l'élément communicant source est entièrement compressée et seul l'identifiant d'interface de l'élément de communication source est transmis dans l'en-tête du message.

Suivant un mode de mise en œuvre particulier du procédé de communication, tous les champs d'adressage de l'adresse réseau de l'élément communicant source peuvent être omis. L'identifiant d'interface IID non transmis est déduit de l'adresse physique.

Lorsque le message indique un mode d'adressage multidiffusion, le premier élément récepteur extrait du message reçu, à l'étape 124' d'obtention d'identifiant d'élément réseau destinataires, l'adresse de groupe. L'étape 124' d'obtention d'identifiant est donc réalisée sans décompression de l'adresse réseau.

Ensuite, il compare à l'étape 126' cet identifiant à toutes les adresses de groupes de multidiffusion auxquels il est abonné pour déterminer s'il est destinataire du message, ces adresses étant par exemple mémorisées dans la mémoire 44 de son interface réseau.

Si l'une des adresses de groupe mémorisée est identique à l'identifiant extrait, le premier élément est destinataire du message et l'étape 126' est suivie de l'étape 128 de traitement du message.

L'étape 130 de filtrage ou retransmission du message reçu, sans effectuer de décompression et de re-compression d'adresse, suit l'étape 126' ou l'étape 128.

Dans ce mode d'adressage, une communication sur l'ensemble du réseau de communication 14 est possible lorsque l'ensemble des éléments communicants présents sur le réseau de communication est abonné à l'adresse de groupe de multidiffusion.

Lorsque le premier élément communicant est un équipement réseau 22, 24 non configuré, de façon préférentielle, dans ce mode d'adressage, il est agencé pour agir comme un concentrateur, c'est-à-dire pour retransmettre, sur un de ses ports, l'ensemble des messages reçus sur l'autre port.

Le premier élément communicant récepteur peut, dans certaines configurations, répondre à l'élément communicant source (étape 132).

Lorsqu'un élément communicant reçoit un message, il possède deux canaux pour répondre à l'élément communicant source du message, le canal point à point et le canal multidiffusion.

Si les éléments communicants source et de destination ne sont pas sur la même liaison physique, aucune réponse n'est possible en mode point à point. En effet, les équipements réseau se comportant comme des filtres, aucun message ne peut traverser ces derniers en mode point à point. Par contre, si les deux éléments de communication source et de destination appartiennent à la même liaison physique, une réponse est possible en mode point à point.

Une réponse est également possible en utilisant le mode d'adressage de type multidiffusion. La réponse ne sera pas envoyée à l'élément source du message en particulier mais à tous les éléments communicants présents sur le réseau de communication en utilisant une adresse de groupe globale.

Le premier élément communicant étant non configuré, une réponse met en œuvre un formatage d'en-tête de message avec compression d'adresses.

Comme expliqué en référence à la figure 7 l'en-tête d'un message comprend un champ 106 adapté à indiquer le nombre maximal de « sauts » HLIM entre équipements réseau que peut effectuer un message. De façon avantageuse ce champ permet de limiter la diffusion du message à l'intérieur du réseau de communication.

Avantageusement, tout élément communicant du réseau est apte à communiquer au moins avec tous les éléments communicants faisant partie du même sous-réseau local en utilisant le protocole de communication, avant formatage complet des adresses réseau.

Avantageusement, la configuration des divers équipements domotiques connectés et le diagnostic peuvent se faire grâce à ce mode de communication avant la configuration complète du réseau de communication.

Avantageusement, le contrôleur 42 d'une interface réseau 40 d'un élément communicant utilise une même pile réseau, adaptée à la fois pour les communications en mode non-configuré et pour les communications en mode configuré.

De façon avantageuse, le procédé selon l'invention permet une communication en mode multidiffusion à l'intérieur d'un réseau de communication ou une partie de réseau de communication non configuré. De plus, la communication n'est pas limitée à la liaison physique ou à un lien local mais peut avoir une portée au-delà de la liaison physique, sur l'ensemble du réseau de communication.

Suivant une particularité de l'invention, l'adresse point-à-point compressée définie dans le réseau de communication ou la partie de réseau non configuré s'exprime de la même manière lorsque le réseau ou la partie de réseau est configurée. Cela permet de préconfigurer les éléments communicants afin que ceux-ci aient des adresses identiques et utilisables avant et après configuration du réseau de communication. Ainsi, les logiciels applicatifs des éléments communicants ainsi configurés peuvent fonctionner de la même manière avant et après configuration du réseau de communication sans reprogrammation.

## Revendications

1. Procédé de communication mis en œuvre dans un système domotique pour bâtiment, ledit système domotique comportant une pluralité d'éléments communicants comprenant des équipements domotiques (6, 8, 10) et des équipements réseau (22,24), lesdits éléments communicants étant connectés à une partie de réseau de communication non configuré, chaque élément communicant étant agencé pour communiquer selon un protocole de communication prédéfini,
et ayant une adresse physique et une adresse réseau comprenant un préfixe de réseau découpé en une pluralité de champs d'adressage (GRP, SID, SSID, IID) dont au moins un champ d'adressage n'est pas renseigné, chaque adresse réseau contenant en outre une partie de l'adresse physique de l'élément communicant, le protocole de communication utilisant des messages véhiculés entre un équipement domotique source et au moins un équipement domotique de destination, chaque message comprenant un en-tête (100), l'en-tête (100) comprenant un premier champ (112) indicateur du mode de compression de l'adresse réseau de destination contenue dans un troisième champ (116) de l'en-tête, et un deuxième champ (108) indicateur du mode de compression de l'adresse réseau de l'élément communicant source du message contenue dans un quatrième champ (114) de l'en-tête,
l'en-tête (100) de message indiquant un mode d'adressage (110) parmi un mode point à point et un mode multidiffusion, le procédé comprenant des étapes, mises en œuvre par un premier équipement domotique (6, 8,10), de :
- réception (120) d'un message comprenant un en-tête (100) contenant: une valeur de deuxième champ (108) indiquant un mode de compression totale de l'adresse réseau source, dans lequel l'adresse réseau source est égale à un champ vide ou comprend uniquement un identifiant d'interface (IID) déduit de l'adresse physique de l'équipement source,
l'en-tête (100) comprenant en outre une valeur de premier champ (112) indiquant un mode de compression totale de l'adresse réseau de destination, dans lequel, en mode d'adressage point à point, l'adresse réseau de destination est soit un champ vide, soit comprend uniquement un identifiant d'interface (IID), et en mode d'adressage multidiffusion, l'adresse réseau de destination est une adresse de groupe,
- détermination (122) de mode d'adressage,
- obtention (124, 124') à partir de l'en-tête reçu d'un identifiant d'élément réseau destinataire, ladite obtention étant telle que :
- lorsque le mode d'adressage est de type point à point, l'identifiant d'élément réseau destinataire est soit déduit d'une adresse physique d'équipement domotique de destination lorsque le champ (116) contenant l'adresse réseau de destination est vide, soit égal à l'identifiant d'interface (IID) extrait du champ (116) contenant l'adresse de réseau de destination,
et lorsque le mode d'adressage est de type multidiffusion, l'identifiant d'élément réseau destinataire est ladite adresse de groupe,
- détermination (126, 126') si ledit premier équipement domotique est destinataire du message, et
- traitement (128, 130, 132) du message reçu en fonction du résultat de la détermination.

2. Procédé de communication selon la revendication 1 comportant, préalablement à l'étape de traitement, une étape de comparaison (126, 126') mise en œuvre par le premier équipement domotique (6, 8,10), de l'identifiant d'élément réseau destinataire à un identifiant prédéterminé mémorisé par ledit premier équipement domotique.

3. Procédé de communication selon la revendication précédente, dans lequel, lorsque le mode d'adressage est de type point à point, lors de l'étape de comparaison, l'identifiant prédéterminé est égal l'adresse physique dudit premier équipement domotique.

4. Procédé de communication selon l'une quelconque des revendications 1 à 3 comportant en outre une étape de filtrage dudit message, ladite étape de filtrage étant mise en œuvre par un équipement réseau (22, 24).

5. Procédé de communication selon l'une quelconque des revendications précédentes dans lequel l'équipement domotique source est un dispositif de configuration, le message comprenant des données de configuration afin de configurer le premier équipement domotique.

6. Procédé de communication selon la revendication 3, dans lequel, lorsque le mode d'adressage est de type multidiffusion, l'identifiant d'élément réseau destinataire est une première adresse de groupe et dans lequel l'identifiant prédéterminé est une deuxième adresse de groupe auquel le premier équipement domotique est abonné.

7. Procédé de communication selon la revendication précédente comportant une étape de communication du message reçu en mode multidiffusion en conservant les champs d'en-tête relatifs à l'adresse réseau de destination et à l'adresse réseau source, ladite étape de communication étant mise en œuvre par un équipement réseau (22, 24).

8. Procédé de communication selon la revendication 7, dans lequel l'étape de communication comprend un formatage de l'en-tête (100) de message par une insertion d'un indicateur (106) indiquant un nombre maximal de sauts entre équipements réseau que peut effectuer le message.

9. Procédé de communication selon une des revendications précédentes dans lequel, après une connexion (70) de la partie de réseau de communication non configurée à un réseau de communication configuré, sont mises en œuvre des étapes préalables de :
- sollicitation (72-76) afin d'obtenir une adresse réseau pour le premier équipement domotique,
- en cas d'absence de réponse à ladite sollicitation, et préalablement à une obtention d'une adresse réseau dudit premier équipement domotique, communication (90B) utilisant un mode de compression totale d'adresses comportant un formatage de message avec un en-tête (100) compressé, permettant audit premier équipement domotique de communiquer avec au moins un deuxième équipement domotique.

10. Système domotique pour un bâtiment comportant une pluralité d'éléments communicants comprenant des équipement domotiques (6, 8, 10) et des équipements réseau (22,24), lesdits éléments communicants étant connectés à une partie de réseau de communication non configuré, chaque élément communicant étant agencé pour communiquer selon un protocole de communication prédéfini et ayant une adresse physique et une adresse réseau comprenant un préfixe de réseau découpé en une pluralité de champs d'adressage (GRP, SID, SSID, IID) dont au moins un champ d'adressage n'est pas renseigné, chaque adresse réseau contenant une partie de l'adresse physique de l'élément communicant, le protocole de communication utilisant des messages véhiculés entre un équipement domotique source et au moins un équipement domotique de destination, chaque message comprenant un en-tête (100), l'en-tête (100) comprenant un premier champ (112) indicateur du mode de compression de l'adresse réseau de destination contenue dans un troisième champ (116) de l'en-tête, et un deuxième champ (108) indicateur du mode de compression de l'adresse réseau de l'élément communicant source du message contenue dans un quatrième champ (114) de l'en-tête, l'en-tête (100) de message indiquant un mode d'adressage (110) parmi un mode point à point et un mode multidiffusion,
le système étant **caractérisé en ce qu'**un premier équipement domotique (6, 8,10) est agencé pour :
- recevoir un message comprenant un en-tête (100) contenant: une valeur de deuxième champ (108) indiquant un mode de compression totale de l'adresse réseau source, dans lequel l'adresse réseau source est égale à un champ vide ou comprend uniquement un identifiant d'interface (IID) déduit de l'adresse physique de l'équipement source, l'en-tête (100) comprenant en outre une valeur de premier champ (112) indiquant un mode de compression totale de l'adresse réseau de destination, dans lequel, en mode d'adressage point à point, l'adresse réseau de destination est soit un champ vide, soit comprend uniquement un identifiant d'interface (IID), et en mode d'adressage multidiffusion, l'adresse réseau de destination est une adresse de groupe,
- déterminer le mode d'adressage,
- obtenir à partir de l'en-tête reçu un identifiant d'élément réseau destinataire, ladite obtention étant telle que :
- lorsque le mode d'adressage est de type point à point, l'identifiant d'élément réseau destinataire est soit déduit d'une adresse physique d'équipement domotique de destination lorsque le champ (116) contenant l'adresse réseau de destination est vide, soit égal à l'identifiant d'interface (IID) extrait du champ contenant l'adresse de réseau de destination,
et lorsque le mode d'adressage est de type multidiffusion, l'identifiant d'élément réseau destinataire est ladite adresse de groupe,
- déterminer si ledit premier équipement domotique est destinataire du message, et
- traiter le message reçu en fonction du résultat de la détermination.

## Patentansprüche

1. Kommunikationsverfahren, das in einem Heimautomatisierungssystem für Gebäude implementiert ist, das Heimautomatisierungssystem umfassend eine Vielzahl von kommunizierenden Elementen, umfassend die Heimautomatisierungsgeräte (6, 8, 10) und Netzwerkgeräte (22, 24), wobei die kommunizierenden Elemente mit einem Teil eines nicht konfigurierten Kommunikationsnetzwerks verbunden sind, wobei jedes kommunizierende Element angeordnet ist, um gemäß einem vordefinierten Kommunikationsprotokoll zu kommunizieren,
und eine physische Adresse und eine Netzwerkadresse aufweist, umfassend ein Netzwerkpräfix, das in eine Vielzahl von Adressfeldern (GRP, SID, SSID, IID) aufgeteilt ist, wovon mindestens ein Adressfeld nicht ausgefüllt ist, wobei jede Netzwerkadresse ferner einen Teil der physischen Adresse des kommunizierenden Elements enthält, wobei das Kommunikationsprotokoll Nachrichten verwendet, die zwischen einem Quell-Heimautomatisierungsgerät und mindestens einem Ziel-Heimautomatisierungsgerät übermittelt werden, jede Nachricht umfassend einen Header (100), der Header (100) umfassend ein erstes Feld (112), das den Kompressionsmodus der in einem dritten Feld (116) des Headers enthaltenen Ziel-Netzwerkadresse angibt, und ein zweites Feld (108), das den Kompressionsmodus der in einem vierten Feld (114) des Headers enthaltenen Netzwerkadresse des kommunizierenden Elements, das Quelle der Nachricht ist, angibt,
wobei der Header (100) der Nachricht einen Adressierungsmodus (110) aus einem Punkt-zu-Punkt-Modus und einem Multicast-Modus angibt, das Verfahren umfassend folgende Schritte, die von einer ersten Heimautomatisierungsgerät (6, 8, 10) implementiert werden:
- Empfangen (120) einer Nachricht, umfassend einen Header (100), der Folgendes enthält: einen zweiten Feldwert (108), der einen vollständigen Kompressionsmodus der Quellnetzwerkadresse angibt, wobei die Quellnetzwerkadresse gleich wie ein leeres Feld ist oder nur einen Schnittstellenidentifikator (IID) umfasst, der von der physischen Adresse des Quellgeräts abgeleitet ist,
der Header (100) ferner umfassend einen ersten Feldwert (112), der einen vollständigen Kompressionsmodus der Ziel-Netzwerkadresse angibt, wobei in dem Punkt-zu-Punkt-Adressierungsmodus die Ziel-Netzwerkadresse entweder ein leeres Feld ist oder nur einen Schnittstellenidentifikator (IID) umfasst, und in dem Multicast-Adressierungsmodus die Ziel-Netzwerkadresse eine Gruppenadresse ist,
- Bestimmen (122) des Adressierungsmodus,
- Erlangen (124, 124') aus dem empfangenen Header eines Identifikators des Ziel-Netzwerkelements, wobei das Erlangen derart ist, dass:
- wenn der Adressierungsmodus des Typs Punkt-zu-Punkt ist, der Identifikator des Ziel-Netzwerkelements entweder von einer physischen Adresse des Ziel-Heimautomatisierungsgerät abgeleitet ist, wenn das Feld (116), das die Ziel-Netzwerkadresse enthält, leer ist, oder gleich wie der Schnittstellenidentifikator (IID) ist, der aus dem Feld (116) extrahiert ist, das die Ziel-Netzwerkadresse enthält,
und wenn der Adressierungsmodus des Typs Multicast ist, ist der Identifikator des empfangenden Netzwerkelements die Gruppenadresse,
- Bestimmen (126, 126'), ob das erste Heimautomatisierungsgerät ein Empfänger der Nachricht ist, und
- Verarbeiten (128, 130, 132) der empfangenen Nachricht abhängig von dem Resultat der Bestimmung.

2. Kommunikationsverfahren nach Anspruch 1, umfassend, vor dem Verarbeitungsschritt, einen von dem ersten Heimautomatisierungsgerät (6, 8, 10) durchgeführten Vergleichsschritt (126, 126') des Identifikators des empfangenden Netzwerkelements mit einem vorbestimmten Identifikator, der von dem ersten Heimautomatisierungsgerät gespeichert wird.

3. Kommunikationsverfahren nach dem vorherigen Anspruch, wobei, wenn der Adressierungsmodus des Typs Punkt-zu-Punkt ist, bei dem Vergleichsschritt der vorbestimmte Identifikator gleich wie die physische Adresse des ersten Heimautomatisierungsgeräts ist.

4. Kommunikationsverfahren nach einem der Ansprüche 1 bis 3, ferner umfassend einen Schritt zum Filtern der Nachricht, wobei der Filterungsschritt von einem Netzwerkgerät (22, 24) durchgeführt wird.

5. Kommunikationsverfahren nach einem der vorherigen Ansprüche, wobei das Quell-Heimautomatisierungsgerät eine Konfigurationsvorrichtung ist, die Nachricht umfassend Konfigurationsdaten zum Konfigurieren des ersten Heimautomatisierungsgeräts.

6. Kommunikationsverfahren nach Anspruch 3, wobei, wenn der Adressierungsmodus des Typs Multicast ist, der Identifikator des empfangenden Netzwerkelements eine erste Gruppenadresse ist, und wobei der vorbestimmte Identifikator eine zweite Gruppenadresse ist, auf die das erste Heimautomatisierungsgerät abonniert ist.

7. Kommunikationsverfahren nach dem vorherigen Anspruch, umfassend einen Kommunikationsschritt der empfangenen Nachricht in dem Multicast-Modus unter Beibehaltung der Header-Felder in Bezug auf die Ziel-Netzwerkadresse und die QuellNetzwerkadresse, wobei der Kommunikationsschritt durch ein Netzwerkgerät (22, 24) durchgeführt wird.

8. Kommunikationsverfahren nach Anspruch 7, wobei der Kommunikationsschritt eine Formatierung des Headers (100) der Nachricht durch Einfügen eines Indikators (106) umfasst, der eine maximale Anzahl von Sprüngen zwischen Netzwerkgeräten angibt, die die Nachricht ausführen kann.

9. Kommunikationsverfahren nach einem der vorherigen Ansprüche, wobei nach einer Verbindung (70) des nicht konfigurierten Kommunikationsnetzteils mit einem konfigurierten Kommunikationsnetz die folgenden vorherigen Schritte durchgeführt werden:
- Aufforderung (72-76), um eine Netzwerkadresse für das erste Heimautomatisierungsgerät zu erlangen,
- im Fall einer fehlenden Antwort auf die Aufforderung und vor einem Erlangen einer Netzwerkadresse des ersten Heimautomatisierungsgeräts, Kommunikation (90B) unter Verwendung eines vollständigen Kompressionsmodus von Adressen, umfassend eine Formatierung der Nachricht mit einem komprimierten Header (100), die es dem ersten Heimautomatisierungsgerät ermöglicht, mit mindestens einem zweiten Heimautomatisierungsgerät zu kommunizieren.

10. Hausautomatisierungssystem für ein Gebäude umfassend eine Vielzahl von kommunizierenden Elementen, umfassend Heimautomatisierungsgeräte (6, 8, 10) und Netzwerkgeräte (22, 24), wobei die kommunizierenden Elemente mit einem Teil eines nicht konfigurierten Kommunikationsnetzwerks verbunden sind, wobei jedes kommunizierende Element angeordnet ist, um gemäß einem vordefinierten Kommunikationsprotokoll zu kommunizieren und eine physische Adresse und eine Netzwerkadresse aufweist, umfassend ein Netzwerkpräfix, das in eine Vielzahl von Adressfeldern (GRP, SID, SSID, IID) unterteilt ist, wovon mindestens ein Adressfeld nicht ausgefüllt ist, wobei jede Netzwerkadresse ferner einen Teil der physischen Adresse des kommunizierenden Elements enthält, wobei das Kommunikationsprotokoll Nachrichten verwendet, die zwischen einem Quell-Heimautomatisierungsgerät und mindestens einem Ziel-Heimautomatisierungsgerät übermittelt werden, jede Nachricht umfassend einen Header (100), der Header (100) umfassend ein erstes Feld (112), das den Kompressionsmodus der in einem dritten Feld (116) des Headers enthaltenen Ziel-Netzwerkadresse angibt, und ein zweites Feld (108), das den Kompressionsmodus der in einem vierten Feld (114) des Headers enthaltenen Netzwerkadresse des kommunizierenden Elements, das Quelle der Nachricht ist, angibt,
wobei der Header (100) der Nachricht einen Adressierungsmodus (110) aus einem Punkt-zu-Punkt-Modus und einem Multicast-Modus angibt.
wobei das System **dadurch gekennzeichnet ist, dass** ein erste Heimautomatisierungsgerät (6, 8, 10) zu Folgendem angeordnet ist:
- Empfangen einer Nachricht, umfassend einen Header (100), der Folgendes enthält: einen zweiten Feldwert (108), der einen vollständigen Kompressionsmodus der Quellnetzwerkadresse angibt, wobei die Quellnetzwerkadresse gleich wie ein leeres Feld ist oder nur einen Schnittstellenidentifikator (IID) umfasst, der von der physischen Adresse des Quellgeräts abgeleitet ist, der Header (100) ferner umfassend einen ersten Feldwert (112), der einen vollständigen Kompressionsmodus der Ziel-Netzwerkadresse angibt, wobei in dem Punkt-zu-Punkt-Adressierungsmodus die Ziel-Netzwerkadresse entweder ein leeres Feld ist oder nur einen Schnittstellenidentifikator (IID) umfasst, und in dem Multicast-Adressierungsmodus die Ziel-Netzwerkadresse eine Gruppenadresse ist,
- Bestimmen des Adressierungsmodus,
- Erlangen aus dem empfangenen Header eines Identifikators des Ziel-Netzwerkelements, wobei das Erlangen derart ist, dass:
- wenn der Adressierungsmodus des Typs Punkt-zu-Punkt ist, der Identifikator des Ziel-Netzwerkelements entweder von einer physischen Adresse des Ziel-Heimautomatisierungsgerät abgeleitet ist, wenn das Feld (116), das die Ziel-Netzwerkadresse enthält, leer ist, oder gleich wie der Schnittstellenidentifikator (IID) ist, der aus dem Feld extrahiert ist, das die Ziel-Netzwerkadresse enthält,
und wenn der Adressierungsmodus des Typs Multicast ist, ist der Identifikator des empfangenden Netzwerkelements die Gruppenadresse,
- Bestimmen, ob das erste Heimautomatisierungsgerät ein Empfänger der Nachricht ist, und
- Verarbeiten der empfangenen Nachricht abhängig von dem Resultat der Bestimmung.

## Claims

1. - A communication method implemented in a home automation system for a building, the said home automation system comprising a plurality of communicating elements comprising home automation equipment units (6, 8, 10) and network equipment units (22,24), the said communicating elements being connected to an unconfigured part of a communication network, each communicating element being designed so as to communicate according to a predefined communication protocol,
and having a physical address and a network address comprising a network prefix divided into a plurality of addressing fields , at least one addressing field of which is not filled in, each network address additionally also containing a part of the physical address of the communicating element, the communication protocol using messages conveyed between a source home automation equipment unit and at least one destination home automation equipment unit, with each message including a header (100), the header (100) comprising a first indication field (112) indicating the compression mode of the destination address contained in a third field (116) of the header, and a second indication field (108) indicating the compression mode of the network address of the communicating element source of the message contained in a fourth field (114) of the header,
the message header (100) indicating an addressing mode (110) among a point-to-point mode and a multicast mode,
the method comprising the steps, operationally implemented by a first home automation equipment unit, (6, 8, 10), consisting of:
- receiving (120) a message comprising a header (100) containing: a value of the second indication field (108) indicating a full compression mode of the source network address, wherein the source network address is an empty field or contains only an interface identifier (IID) deduced from the physical address of the source equipment unit,
the header (100) further comprising a value of the first indication field (112) indicating a full compression mode of the destination network address, wherein, when the addressing mode is point-to-point mode, the destination network address is either an empty field or contains only an interface identifier (IID), and when the addressing mode is multicast mode, the destination network address is a group address,
- determining (122) the addressing mode,
- obtaining (124, 124 ') from the header received, of a destination network element identifier, wherein said obtaining comprises:
- when the addressing mode is of point-to-point type, the identifier of the destination network element is either deduced from a physical address of a destination home automation equipment when the field (116) comprising the destination network address is empty, or equal to the interface identifier (IID) extracted from the field (116) comprising the destination network address,
and when the addressing mode is of multicast type, the identifier of the destination network element is said group address,
- determining (126, 126 ') whether the said first home automation equipment unit is the recipient of the message; and
- processing (128, 130, 132) of the message received as a function of the result of the determination.

2. - A communication method according to claim 1 comprising, prior to the processing step, a comparison step (126, 126') operationally implemented by the first home automation equipment unit (6, 8, 10), for comparing the destination network element identifier to a predetermined identifier stored by the said first home automation equipment unit.

3. - A communication method according to the preceding claim, wherein, when the addressing mode is of point-to-point type, during the comparison step, the predetermined identifier equal to the physical address of the said first home automation equipment unit.

4. - A communication method according to any one of claims 1 to 3 in addition including a filtering step of filtering the said message, with the said filtering step being operationally implemented by a network equipment unit (22, 24).

5. - A communication method according to any one of the preceding claims, in which the source home automation equipment unit is a configuration device, the message including the configuration data in order to configure the first home automation equipment unit.

6. - A communication method according to claim 3, in which, when the addressing mode is of the multicast type, the destination network element identifier is a first group address and in which the predetermined identifier is a second group address to which the first home automation equipment unit is subscribed.

7. - A communication method according to the preceding claim including a message communication step of communicating the message received in multicast mode preserving the header fields relating to the destination network address and the source network address, the said communication step being operationally implemented by a network equipment unit (22, 24).

8. - A communication method according to claim 7, in which the communication step includes the formatting of the message header (100) by an insertion of an indicator (106) indicating a maximum number of hops between network equipment units that the message can perform.

9. - A communication method according to one of the preceding claims, in which, after a connection (70) from the unconfigured part of the communication network to a configured communication network, are executed the following preliminary steps of:
- requesting (72-76) in order to obtain a network address for the first home automation equipment unit;
- in the event of no response to the said request, and prior to the obtaining of a network address of the said first home automation equipment unit, communication (90B) using a full address compression mode comprising formatting the message with a compressed header (100), enabling the said first home automation equipment unit to communicate with at least one second home automation equipment unit.

10. - A home automation system for a building that includes a plurality of communicating elements comprising home automation equipment units (6, 8, 10) and network equipment units (22, 24), the said communicating elements being connected to an unconfigured part of a communication network, each communicating element being arranged so as to communicate according to a predefined communication protocol and having a physical address and a network address comprising a network prefix divided into a plurality of address fields (GRP, SID, SSID, IID) of which at least one address field is not filled-in, each network address containing part of the physical address of the communicating element, the communication protocol using messages conveyed between a source home automation equipment unit and at least one destination home automation equipment units, each message comprising a header, the header (100) comprising a first indication field (112) indicating the compression mode of the destination address contained in a third field (116) of the header, and a second indication field (108) indicating the compression mode of the network address of the communicating element source of the message contained in a fourth field (114) of the header,
the message header (100) indicating an addressing mode (110) among a point-to-point mode and a multicast mode,
the system being **characterised in that** a first home automation equipment unit is arranged for:
- receiving a message comprising a header (100), containing a value of the second indication field (108) indicating a full compression mode of the source network address, wherein the source network address is an empty field or contains only an interface identifier (IID) deduced from the physical address of the source equipment unit,
the header (100) further comprising a value of the first indication field (112) indicating a full compression mode of the destination network address, wherein, when the addressing mode is point-to-point mode, the destination network address is either empty or contains only an interface identifier (IID), and when the addressing mode is multicast mode, the destination network address is a group address,
- determining (122) the addressing mode,
- obtaining from the header received, a destination network element identifier,
wherein said obtaining comprises:
- when the addressing mode is of point-to-point type, the identifier of the destination network element is either deduced from a physical address of a destination home automation equipment when the field (116) comprising the destination network address is empty, or equal to the interface identifier (IID) extracted from the field (116) comprising the destination network address,
and when the addressing mode is of multicast type, the identifier of the destination network element is said group address,
determining whether the said first home automation equipment unit is the recipient of the message, and
- processing the message received based on the result of the determination.
